# EUROPEAN PATENT APPLICATION

(11) **EP 3 587 515 A1**
(43) Date of publication of application: **01.01.2020**
(21) Application number: 19178366.1
(22) Date of filing: 05.06.2019
(51) Int. Cl.: C09D 11/102, C09D 11/104, C09D 11/108, C09D 11/322, C09D 11/38, C09D 11/40, C09D 11/54, C08G 18/00, C08G 18/12, C08G 18/42, C08G 18/44, C08G 18/48, C08G 18/75

(54) **INK-JET RECORDING LIQUID SET, PREPARATION METHOD OF PRETREATMENT LIQUID FOR INK-JET RECORDING, PRINTED MATTER, AND INK-JET RECORDING METHOD**

(30) Priority: 22.06.2018 JP 2018118717
(71) Applicant: KONICA MINOLTA, INC., Tokyo 100-7015 (JP)
(72) Inventor: MORIYAMA, Haruka, Tokyo 100-7015 (JP); TOEDA, Takayuki, Tokyo 100-7015 (JP); TAGORI, Hirotaka, Tokyo 100-7015 (JP)
(74) Representative: Henkel & Partner mbB

(57) **Abstract**

Provided is an ink-jet recording liquid set containing a pretreatment liquid and an ink, wherein the pretreatment liquid contains a coagulant, water, and water-insoluble resin particles containing at least one of a polyester skeleton, a polyolefin skeleton and polyurethane skeleton; and the ink contains at least a pigment, a compound having an oxazoline group, and water.

## Description

Japanese Patent Application No. 2018-118717, filed on June 22, 2018 with Japan Patent Office, is incorporated herein by reference in its entirety.

### Technological Field

The present invention relates to an ink-jet recording liquid set, a preparation method of g a pretreatment liquid for ink-jet recording, a printed matter, and an ink-jet recording method. More specifically, the present invention relates to an ink-jet recording liquid set which is excellent in image quality and water resistance and is further excellent in adhesion between a non-absorptive substrate and a pretreatment layer and peeling strength even when the non-absorptive substrate is used as a recording medium.

### Description of the Related Art

In the printing field, printing methods using ink-jet have been developed and are widely put to practical use. When printing using an ink-jet ink (hereinafter, also simply referred to as "ink") and an ink-jet printer, the ink ejected from the ink-jet head lands on a recording medium, then penetrates and is fixed to form dots. An image is formed by gathering a large number of dots. The formation process of this dot is important in forming a clear image.

As the recording medium, various media such as uncoated paper, coated paper, stretched polypropylene resin, polyester resin, vinyl chloride resin and nylon are used.

Among them, when a non-absorptive substrate such as a resin is used as the recording medium, the coloring material may not be uniformly coated on the surface of the recording medium, so that unevenness occurs or an excessive gap is generated between dots to cause white spots. Also, since the droplets of the aqueous ink remain on the surface of the recording medium, it is difficult for the color material to be fixed. As a result, there is a problem that non-uniform color mixing occurs in boundary areas of different colors, and bleeding easily occurs.

To solve such problems, in order to print the aqueous ink on a non-absorptive substrate such as a polyester resin, there is known a method of providing a pretreatment layer formed by drying a pretreatment liquid to a substrate and recording an image with excellent image quality (refer to, for example, Patent Document 1: JP-A 2014-111374). However, it has been found that in the case of a non-absorptive substrate represented by polyethylene terephthalate and stretched polypropylene, the image tends to blur and the adhesion of the pretreatment layer is not sufficient.

Furthermore, it is known to add a cross-linking agent to the ink to improve the water resistance of the coating (refer to, for example, Patent Document 2: JP-A 2017-066215). However, even if the ink layer is cross-linked, the image adhesion to the non-absorptive substrate is not sufficient, and printing on the non-absorptive substrate causes white spots and the image quality is not sufficient.

In addition, when a pretreatment liquid containing a coagulant is applied on a non-absorptive substrate, the image quality is improved, and the pretreatment layer containing a cross-linking agent also has good water resistance and adhesion to non-absorptive substrates (refer to, for example, Patent Document 3: JP-A 2016-153233). However, it was found that when the cross-linking agent is contained in the pretreatment layer, the water resistance of the pretreatment layer and all layers including the ink layer is reduced because the contribution to the ink layer printed on the pretreatment layer is reduced.

Furthermore, when the ink contains a resin and the treatment liquid contains a coagulant, the image quality and the adhesion to the non-absorptive substrate are improved (refer to, for example, Patent Document 4: JP-A2012-162654). However, when the pretreatment liquid contains a coagulant, there is a problem that the water resistance of all layers including the pretreatment layer and the ink layer may not be obtained due to the hydrophilicity of the coagulant.

### Summary

An object of the present invention is to provide an ink-jet recording liquid set which is excellent in image quality and water resistance and is further excellent in adhesion between a non-absorptive substrate and a pretreatment layer and peeling strength even when the non-absorptive substrate is used as a recording medium. An object of the present invention is also to provide a preparation method of a pretreatment liquid for ink-jet recording, a printed matter, and an ink-jet recording method.

In order to solve the above problems, an ink-jet recording liquid set that reflects an aspect of the present invention comprises a pretreatment liquid and an ink, wherein the pretreatment liquid contains a coagulant, water, and water-insoluble resin particles containing at least one of a polyester skeleton, a polyolefin skeleton and polyurethane skeleton; and the ink contains at least a pigment, a compound having an oxazoline group, and water.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention.
FIG. 1 is a schematic view illustrating an example of a pretreatment and an ink-jet recording apparatus preferably used for the present invention.
FIG. 2 is a cross-sectional drawing which illustrates a schematic structure of the printed matter of the present invention.
FIG. 3 is a cross-sectional drawing of a PET/CPP laminate body for measuring peeling strength.

### Detailed Description of the Embodiments

Hereinafter, one or more embodiments of the present invention will be described with reference to the drawings. However, the scope of the invention is not limited to the disclosed embodiments.

An ink-jet recording liquid set of the present invention is an ink-jet recording liquid set comprising at least a pretreatment liquid and an ink, wherein the pretreatment liquid contains a coagulant, water, and water-insoluble resin particles containing at least one of a polyester skeleton, a polyolefin skeleton and polyurethane skeleton; and the ink contains at least a pigment, a compound having an oxazoline group, and water.

Although an appearing mechanism or an action mechanism of the effect of the present invention is not clarified, it is presumed as follows.

The present inventors found the following after investigation. By using an ink-jet recording liquid set in which the pretreatment liquid contains water-insoluble resin particles having a specific skeleton and a coagulant, and the ink contains a specific cross-linking agent, it is possible to hydrophobilize the coagulant in the ink coating after image formation, thereby it is possible to obtain improved water resistance of all layers including the pretreatment layer and the ink layer. Furthermore, it was surprisingly found that the peeling strength is also excellent.

### (With regard to image quality)

In the past, it has been known that bleeding of the ink on the substrate can be prevented by containing a coagulant in the pretreatment liquid to aggregate a coloring material component in the ink. However, in the case of aggregating the color material component in the ink containing the cross-linking agent other than the present invention, the reactivity of the cross-linking agent and the color material component is high, so the wetting and spreading becomes insufficient and the image quality is deteriorated. On the other hand, when the oxazoline group-containing compound according to the present invention is used as the cross-linking agent contained in the ink, the reactivity between the cross-linking agent and the color material component is lowered, so that the wetting and spreading becomes good. Therefore, it is presumed that good image quality may be obtained without loss of water resistance.

### (With regard to water resistance)

In the past, it has been known that that water resistance of the ink layer is improved by adding a cross-linking agent to the ink, and by adding a cross-linking agent to the pre-treatment liquid to improve the water resistance. However, when the coagulant is contained in the pretreatment liquid, there is a problem that the water resistance is greatly deteriorated due to the hydrophilicity of the coagulant. When a resin, a coagulant, and a cross-linking agent as described in the present invention are combined with each other, the cross-linking agent in the ink is insolubilized in water by cross-linking the coagulant component diffusing from the pretreatment layer to the ink layer. In addition, the cross-linking agent in the ink cross-links and polymerizes the coloring component in the ink, thereby insolubilizing the ink layer into water. Therefore, it is presumed that the water resistance of all layers including the pretreatment layer and the in-layer may be obtained.

### (With regard to image adhesion property)

In the past, it has been known that polyacrylic resins, polyester resins, polyurethane resins and polyolefin resins are used for the purpose of improving the image adhesion to non-absorptive substrates. However, when using a pretreatment liquid containing the above resin and a coagulant, it is difficult to satisfy the image adhesion because the coagulant inhibits the interaction between the above resin and the color material component in the ink. On the other hand, when the resin, the coagulant and the cross-linking agent described in the present invention are combined, the cross-linking agent reacts with the coagulant, so that the interaction between the resin and the colorant component in the ink is not inhibited. Therefore, it is inferred that the image adhesion to the non-absorptive substrate is good.

### (With regard to peeling strength)

Even more surprisingly, it has been found that the peeling strength is also excellent when practiced in the combination of the present invention. It is assumed that this is caused by the following: (a) when the resin described in the present invention is used in the pretreatment liquid, the adhesion property between the non-absorptive substrate and the resin in the pretreatment liquid, and the adhesion property between the resin in the pretreatment liquid and the ink layer are increased due to the flexibility of the resin; (b) by using the cross-linking agent described in the present invention in the ink, the coloring material component in the ink and the coagulant that diffuses into the ink layer are polymerized by crosslinking, and by improving the strength of the ink layer, the strength of the non-absorptive substrate, the pretreatment layer, the interface, the inner side and both of the ink layer, may be effectively enhanced, and cohesive failure is suppressed.

As an embodiment of the present invention, from the viewpoint of exhibiting the effects of the present invention, the coagulant is preferably a polyvalent metal salt or an organic acid. When the coagulant is a polyvalent metal or an organic acid, the reaction rate with the cross-linking agent in the ink is improved, and the interaction between the coloring material and the resin is enhanced, so that the image adhesion is excellent.

It is preferable that the water-insoluble resin particles contain composite resin particles in which a polyolefin resin is contained in a polyurethane resin. Further, it is preferable to contain composite resin particles in which a polyolefin resin is emulsified in a polyurethane resin. The Composite resin particles in which a polyolefin resin is contained in a polyurethane resin are in the state where the urethane resin and the olefin resin, which originally have low interaction strongly interact with each other. Further, when the composite particles are formed into a film, the highly compatible urethane resin particles are fused to form a fine sea-island structure. As a result, the olefin resin capable of interacting with the low polarity polypropylene substrate, the highly polar polyethylene terephthalate substrate, and the urethane resin capable of interacting with the coloring material are firmly fixed on the substrate. Therefore, it is excellent in the image adhesiveness to polyolefin substrate and polyethylene terephthalate substrate which have a different polarity.

It is preferable that a content mass ratio (U/O) value of the polyurethane resin (U) and the polyolefin resin (O) in the composite resin particles is in the range of 40/60 to 95/5. More preferably, it is in the range of 40/60 to 70/30. When the existing ratio of the polyurethane resin is in the above range, the interaction with the color material tends to be improved, and the image adhesion is excellent. Moreover, when the existing ratio of the polyolefin resin is in the above range, it is excellent in water resistance.

It is preferable that a polyol component in the polyurethane resin has a carbonate group or an ether bond. When the polyol component has a carbonate group or an ether bond, hydrolysis is less likely to occur, and thus the water resistance is excellent.

It is preferable that an amount of the compound having an oxazoline group contained in the ink is in the range of 0.5 to 5 mass%. When the amount of the compound having an oxazoline group is in the above range, the cross-linking reaction between the compound having an oxazoline group and the coagulant, and the cross-linking reaction between the compound having an oxazoline group and the ink component will proceed efficiently. As a result, since the strength of the interface between the pretreatment layer and the ink layer and the strength of the ink layer may be increased, the peeling strength is excellent.

It is preferable that an amount of the coagulant contained in the pretreatment liquid is in the range of 10 to 35 mass% from the viewpoint of image quality.

A method of preparing the pretreatment liquid for ink-jet recording of the present invention has the steps of: forming composite resin particles by emulsifying a polyolefin resin and a polyurethane resin; and mixing the composite resin particles and the coagulant.

A printed matter of the present invention is formed on a non-absorptive film substrate using the ink-jet recording liquid set of the present invention.

An ink-jet recording method of the present invention records an image on a non-absorptive film substrate using the ink-jet recording liquid set of the present invention.

The present invention and the constitution elements thereof, as well as configurations and embodiments, will be detailed in the following. In the present description, when two figures are used to indicate a range of value before and after "to", these figures are included in the range as a lowest limit value and an upper limit value.

### <<Outline of ink-jet recording liquid set of the present invention>>

An ink-jet recording liquid set of the present invention comprises at least a pretreatment liquid and an ink, wherein the pretreatment liquid contains a coagulant, water, and water-insoluble resin particles containing at least one of a polyester skeleton, a polyolefin skeleton and polyurethane skeleton; and the ink contains at least a pigment, a compound having an oxazoline group, and water.

The ink-jet recording liquid set of the present invention is not particularly limited in its use. It forms a pretreatment layer on the non-absorptive film substrate using the pretreatment liquid according to the present invention, and records an image using the above-mentioned ink thereon. Thereby it is possible to record a high quality image on a non-absorptive film substrate.

### 1. Substrate

Although the substrate which may be used for the present invention is not specifically limited, it is preferable that the substrate is a non-absorptive substrate. In the present invention, "non-absorptive" indicate a property of non-absorptivity to water.

Known plastic films may be used as examples of the non-water absorptive substrate. Specific examples are: a polyester film such as a polyethylene terephthalate film, a polyethylene film, a polypropylene film, a polyamide film such as a nylon film, a polystyrene film, a polyvinyl chloride film, a polycarbonate film, a polyacrylonitrile film, and a biodegradable film such as a polylactic acid film. Moreover, in order to provide a gas barrier property, moisture proof property, and odor retention property, a film which is coated with polyvinylidene chloride on a single surface or on both surfaces of a film, and a film which is vapor-deposited with metal oxide may be suitably used. The non-water absorbing film may be either an un-stretched film or a stretched film.

In the present invention, the thickness of the substrate is preferably in the range of 10 to 120 µm, more preferably in the range of 12 to 60 µm.

### 2. Pretreatment liquid

The "pretreatment liquid" in the present invention has functions of accelerating the image formation of the ink, improving the physical properties of the pretreatment layer and the ink layer, and improving the image quality when an image is formed on the substrate by the ink-jet printing method.

Specifically, in the present invention, the pretreatment liquid according to the present invention is coated on the surface of the substrate to be printed with an ink-jet method and dried. Then, by printing the ink according to the present invention, even if the substrate is non-absorptive, it is possible to achieve recording excellent in image quality and water resistance and excellent in adhesion between the non-absorptive substrate and the pretreatment layer.

The pretreatment liquid according to the present invention contains water-insoluble resin particles containing at least one of a polyester skeleton, a polyolefin skeleton and polyurethane skeleton, a coagulant and water.

### (Water-insoluble resin particles)

The pretreatment liquid contains water-insoluble resin particles. The water-insoluble resin particles used in the present invention are in a state of a fine particle dispersion liquid of a water-insoluble resin which can accept an ink and exhibits solubility or affinity to the ink.

Water-insoluble resin fine particles are inherently water-insoluble, but have a form in which the resin is dispersed in an aqueous medium as micro fine particles. It is a water-insoluble resin dispersed in water by forced emulsification using an emulsifier, or a water-insoluble resin having a hydrophilic functional group in the molecule, and is able to from stable aqueous dispersion by itself without using emulsifier or dispersion stabilizer. These resins are usually used in the state of being emulsified and dispersed in water or a water-alcohol mixed solvent.

In the present invention, "water insoluble" means the resin having the following property. When the resin is dissolved in 100 g of water at 25 °C after being dried at 105 °C for 2 hours, the amount of dissolution is 10 g or less, preferably 5 g or less, and more preferably 1 g or less. However, when the resin has a salt-forming group, the amount of dissolution is the amount of dissolution when the salt-forming group of the resin is neutralized 100% with acetic acid or sodium hydroxide, depending on the type.

The water-insoluble resin particles according to the present invention contain at least one of a polyester skeleton, a polyolefin skeleton or a polyurethane skeleton.

More preferably, the water-insoluble resin particles are composite resin particles in which a polyolefin resin is contained in a polyurethane resin. The state in which the polyolefin resin is contained in the polyurethane resin can take various aspects. The polyolefin resin may be dispersed as a plurality of particles in the polyurethane resin, and the polyolefin resin may form a core and form a core-shell structure having the polyurethane resin as a shell. In addition, the polyolefin resin may be contained so that polyolefin resin is partially exposed to the surface. In addition, other types of resins may be contained as long as the effects of the present invention are not impaired. Furthermore, it is a preferred embodiment that the water-insoluble resin particles contain composite resin particles formed by emulsifying a polyolefin resin in a polyurethane resin.

Preferably, the water-insoluble resin particles are contained in the range of 1 to 30 mass% with respect to the total mass (100 mass%) of the pretreatment liquid. It is more preferable that the water-insoluble resin particles are contained in the range of 2 to 20 mass% from the viewpoint of storage stability as a pretreatment liquid and suppressing blooming (phenomenon in which a resin and a coagulant are precipitated and crystallized on the image surface).

### (Polyester resin)

The polyester-based resin having a polyester skeleton contained in the water-insoluble resin is obtained by using a polyhydric alcohol component and a polycarboxylic acid component such as polycarboxylic acid, polycarboxylic acid anhydride, and polycarboxylic acid ester.

Examples of the polyhydric alcohol component are: divalent alcohols (diols) such as alkylene glycols having 2 to 36 carbon atoms (ethylene glycol, 1,2-propylene glycol, 1,3-propylene glycol, 1,4-butylene glycol, and 1,6-hexanediol), alkylene ether glycols having 4 to 36 carbon atoms (diethylene glycol, triethylene glycol, dipropylene glycol, polyethylene glycol, polypropylene glycol, and polybutylene glycol), alicyclic diols having 6 to 36 carbon atoms (1,4-cyclohexanedimethanol and hydrogenated bisphenol A), adducts of the alicyclic diols with alkylene oxide having 2 to 4 carbon atoms (ethylene oxide (abbreviated as EO), propylene oxide (PO), and butylene oxide (BO)) (adduct mole number: 1 to 30), adducts of bisphenols (bisphenol A, bisphenol F, and bisphenol S) with alkylene oxide having 2 to 4 carbon atoms (EO, PO, and BO) (adduct mole number: 2 to 30). These may be used alone or in combination of two or more.

Examples of the polycarboxylic acid component are: divalent carboxylic acid (dicarboxylic acid) such as alkanedicarboxylic acids having 4 to 36 carbon atoms (succinic acid, apidic acid, and sebacic acid), alkenyl succinic acids (e.g., dodecenyl succinic acid), alicyclic dicarboxylic acids having 4 to 36 carbon atoms (dimer acid (e.g., dimerized linoleic acid), alkene dicarboxylic acids having 4 to 36 carbon atoms (maleic acid, fumaric acid, citraconic acid, and mesaconic acid), and aromatic dicarboxylic acids having 8 to 36 carbon atoms (phthalic acid, isophthalic acid, terephthalic acid or derivatives thereof, and naphthalene dicarboxylic acid). These may be used alone or in combination of two or more.

The number average molecular weight of the polyester resin is preferably in the range of 1000 to 50000, and more preferably in the range of 2000 to 20000.

A commercial item may be used as the polyester resin. Examples of the commercial item are: Elitel KA-5034 (product of Unitika Ltd., number average molecular weight: 8500), Elitel KA-5071 S (product of Unitika Ltd., number average molecular weight: 8500), Elitel KA-1449 (product of Unitika Ltd., number average molecular weight: 7000), Elitel KA -0134 (product of Unitika Ltd., number average molecular weight: 8500), Elitel KA-3556 (product of Unitika Ltd., number average molecular weight: 8000), Elitel KA-6137 (product of Unitika Ltd., number average molecular weight: 5000), Elitel KZA-6034 (product of Unitika Ltd., number average molecular weight: 6500), Elitel KT-8803 (product of Unitika Ltd., number average molecular weight: 15000), Elitel KT-8701 (product of Unitika Ltd., number average molecular weight: 13000), Elitel KT-9204 (product of Unitika Ltd., number average molecular weight: 17,000 , Elitel KT-8904 (product of Unitika Ltd., number average molecular weight: 17000), Elitel KT-0507 product of Unitika Ltd., number average molecular weight: 17000), Elitel KT-9511 (product of Unitika Ltd., number average molecular weight: 17000). These may be used alone or in combination of two or more.

### (Polyolefin resin)

Examples of the polyolefin resin include modified polyolefins such as polyolefins modified with unsaturated carboxylic acids and/or acid anhydrides.

Examples of the polyolefin include: polyethylene, polypropylene, ethylene-propylene copolymer, random copolymers or block copolymers of ethylene and/or propylene with other comonomers (a-olefin comonomers having 2 or more carbon atoms, preferably 2 to 6 carbon atoms such as 1-butene, 1-pentene, 1-hexene, 1-heptene, 1-octene, and 1-nonene)(e.g., ethylene-propylene-butene copolymers). Moreover, the substances obtained by co-polymerization of two or more types of these other comonomers may be used.

In addition, two or more of these polymers may be used by mixing.

As the modified polyolefin, a polyolefin modified with an unsaturated carboxylic acid and/or an acid anhydride and/or a compound having one or more double bonds per molecule is preferably used.

Examples of an unsaturated carboxylic acid and an acid anhydride include α, β-unsaturated carboxylic acids and their anhydrides. Specific examples thereof are: maleic acid, maleic anhydride, fumaric acid, citraconic acid, citraconic anhydride, mesaconic acid, itaconic acid, itaconic anhydride, aconitic acid, and aconitic acid anhydride.

These may be used alone or in combination of two or more. When two or more are used in combination, the physical properties of the coating often become good.

As the compound having one or more double bonds per one molecule, a (meth)acrylic acid based monomer may be cited. Examples of the (meth)acrylic acid based monomer are: methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylic acid, (di)ethylene glycol di(meth)acrylate, di (meth) acrylic acid 1,4-butanediol di(meth)acrylate, 1,6-hexanediol di(meth)acrylate, trimethylolpropane tri(meth)acrylate, glycerol di(meth)acrylate, 2-ethylhexyl (meth)acrylate, lauryl (meth)acrylate, stearyl (meth)acrylate, and stearyl acrylamide. A styrene bases monomer may be also cited. Examples of the styrene bases monomer are: styrene, α-methylstyrene, paramethylstyrene, and chloromethylstyrene. Other usable monomers include vinyl-based monomers such as divinyl benzene, vinyl acetate, and vinyl esters of versatic acid. Here, (meth) acrylic acid indicates acrylic acid and methacrylic acid.

Modification of the polyolefin is carried out by dissolving the polyolefin once in an organic solvent such as toluene or xylene, and in the presence of a radical generator, by reacting α,β-unsaturated carboxylic acid and/or its acid anhydride and/or a compound having one or more double bonds per molecule. Alternatively, in an autoclave which may be reacted in a molten state capable of raising the temperature to the softening temperature or melting point of the polyolefin or higher, or in a uniaxial or biaxial multiaxial extruder, in the presence or absence of a radical generator, modification may be carried out by reacting α,β-unsaturated carboxylic acid and/or its acid anhydride and/or a compound having one or more double bonds per molecule.

Examples of the radical generator are: peroxides such as di-tert-butyl perphthalate, tert-butyl hydroperoxide, dicumyl peroxide, benzoyl peroxide, tert-butyl peroxybenzoate, tert-butyl peroxyethyl hexanoate, tert-butyl peroxypivalate, methyl ethyl ketone peroxide, and di-tert-butyl peroxide; and azonitrile compounds such as azobisisobutyronitrile and azobisisopropionitrile. When graft copolymerization is carried out using these peroxides, the amount of peroxide is preferably in the range of 0.1 to 50 mass parts, particularly preferably in the range of 0.5 to 30 mass parts with respect to 100 mass parts of the polyolefin.

The above-mentioned polyolefin resin as an emulsification raw material may be manufactured by a publicly known method, and there is no limitation in particular about each manufacturing method or modification degree.

The polyolefin resin used in the present invention preferably has a weight average molecular weight in the range of 20000 to 100000. When it is 20000 or more, the cohesion of the coating film becomes strong, and the coating film physical properties such as adhesion and solvent resistance (gasohol resistance) are improved. When it is 100000 or less, the solubility with respect to the organic solvent is good, and particle size reduction of the emulsified dispersion is promoted.

The weight average molecular weight is a value measured by gel permeation chromatography (GPC). For example, by using "RID-6A" manufactured by Shimadzu Corporation (column: Tosoh Corporation "TSK-GEL", solvent: tetrahydrofuran (THF) and column temperature: 40 °C), it may be determined from a calibration curve prepared with polystyrene standard samples.

In the present invention, commercially available polyolefin resins may also be used. As resin particles made of resin having polyolefin structure, the following may be used: "AUROREN 150A" (polyolefin resin fine particles), "SUPERCHLON E-415" (polypropylene resin fine particles), and "AUROREN AE-301" (polyolefin resin fine particles)(made by Nippon Paper Industries Co., Ltd.); and "HARDLEN Na-1001" (made by Toyo Kasei Co., Ltd.).

### (Polyurethane resin)

As a polyurethane resin, a substance having a hydrophilic group is used. By introducing a hydrophilic group, the function as an emulsifier for a polyolefin resin may be imparted to the polyurethane resin, and composite resin particles that are an emulsified dispersion of the polyolefin resin may be obtained.

As such a hydrophilic group, a carboxy group (-COOH) and a salt thereof, and a sulfonic acid group (-SO₃H) and a salt thereof may be mentioned.

Examples of the salt include alkali metal salts such as sodium salt and potassium salt, and amine salts. Among these, as a hydrophilic group, a carboxy group or a salt thereof is preferable.

The polyurethane-based resin that may be used for the composite resin particles is preferably an aqueous dispersion in which a self-emulsifying polyurethane having a water-soluble functional group is dispersed in the molecule, or an aqueous dispersion of forced emulsification type polyurethane prepared by emulsifying with a strong mechanical shear force using a surfactant. The polyurethane resin in the aqueous dispersion is obtained by the reaction of a polyol with an organic polyisocyanate and a hydrophilic group-containing compound.

Examples of a polyol which may be used for preparation of polyurethane resin aqueous dispersion are: polyester polyol, polyether polyol, polycarbonate polyol, and polyolefin type polyol. Among them, it is preferable to use a polyether polyol or a polycarbonate polyol to form a structure having a carbonate group or an ether group in a urethane resin, because the compatibility with a coagulant is excellent.

Polyester polyols include condensation products made of low molecular weight polyols and polycarboxylic acids. Examples of the low molecular weight polyol are: ethylene glycol, diethylene glycol, triethylene glycol, 1,2--propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Examples of the polycarboxylic acid are: succinic acid, glutaric acid, adipic acid, sebacic acid, phthalic acid, isophthalic acid, terephthalic acid, trimellitic acid, tetrahydrofuranic acid, endomethine tetrahydrofuranic acid, and hexahydrophthalic acid.

As polyether polyols, various polyether polyols may be mentioned. Examples of the polyether polyol are: polyethylene glycol, polypropylene glycol, polyethylene polytetramethylene glycol, polypropylene polytetremethylene glycol, and polytetramethylene glycol.

The polycarbonate polyol may be obtained, for example, by the reaction of a carbonic acid derivative such as diphenyl carbonate, dimethyl carbonate or phosgene with a diol. Examples of the diol are: ethylene glycol, diethylene glycol, triethylene glycol, 1,2-propylene glycol, 1,3-propylene glycol, neopentyl glycol, 1,3-butanediol, 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexane dimethanol. Among these, polycarbonate polyols using 1,6-hexanediol are preferable from the viewpoint of weather resistance and solvent resistance.

As the organic polyisocyanate, those known in the field of urethane industry may be used. Examples thereof are: aromatic isocyanates such as tolylene diisocyanate (TDI), diphenylmethane diisocyanate (MDI), polymeric (MDI), xylylene diisocyanate (XDI), and tetramethyl xylylene diisocyanate (TMXDI); aliphatic isocyanate such as hexamethylene diisocyanate (HMDI); alicyclic isocyanates such as isophorone diisocyanate (IPDI), and 4,4'-dicyclohexylmethane diisocyanate (hydrogenated MDI, H12 MDI). Among these, it is preferable to use aliphatic isocyanate and/or alicyclic isocyanate. When non-yellowing is required, it is preferable to use HMDI for aliphatic isocyanates, IPDI and H12 MDI for alicyclic isocyanates, and XDI and TMXDI for aromatic isocyanates.

These may be used alone or in combination of two or more.

As a hydrophilic group containing compound, the compound which has one or more active hydrogen atoms and the said hydrophilic group in a molecule is mentioned. Examples thereof are: compounds containing a carboxylic group such as 2,2-dimethylol propionic acid, 2,2-dimethylol butanoic acid, 2,2-dimethylol butyric acid, 2,2-dimethylol valeric acid, and glycine, and their derivatives of sodium salts, potassium salts, and amine salts; compounds containing a sulfonic acid group such as taurine (i. e., aminoethyl sulfonic acid), and ethoxypolyethylene glycol sulfonic acid, and their derivatives of sodium salts, potassium salts, and amine salts.

The polyurethane resin according to the present invention may be produced as follows. Firstly, a urethane prepolymer is obtained by mixing a polyol, an organic polyisocyanate and a hydrophilic group-containing compound and allowing them to react at 30 to 130 °C for 30 minutes to 50 hours by a known method.

The obtained urethane prepolymer is extended and polymerized by a chain extender to obtain a polyurethane resin having a hydrophilic group.

As a chain extender, water and/or an amine compound is preferably used. By using water or an amine as a chain extender, the isocyanate-terminated prepolymer may be efficiently elongated by reacting with a free isocyanate in a short time.

The amines as a chain extender include polyamines. Examples of polyamines are: aliphatic polyamines such as ethylenediamine and triethylenediamine; aromatic polyamines such as meta xylene diamine and toluylene diamine; hydrazine; and polyhydrazino compound such as adipic acid dihydrazide. The amine may contain, together with the above-mentioned polyamine, a monovalent amine such as dibutylamine or methyl ethyl ketoxime as a reaction terminator to such an extent that polymerization is not significantly inhibited.

In the synthesis of the urethane prepolymer, a solvent which is inert to isocyanate and which can dissolve the urethane prepolymer may be used. Examples of the solvent include: dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction step are finally removed.

In addition, in the synthesis of the urethane prepolymer, a catalyst may be added to accelerate the reaction. Examples thereof are: amine catalysts (e.g., triethylamine, N-ethylmorpholine, and triethyldiamine), tin-based catalysts (e.g., dibutyltin dilaurate and dioctyltin dilaurate), and titanium-based catalysts (e.g., tetrabutyl titanate).

The molecular weight of the polyurethane resin is preferably as large as possible by introducing a branched structure or an internal cross-linking structure. The molecular weight is preferably in the range of 50,000 to 10,000,000. When the molecular weight is increased to be insoluble in the solvent, a coating film having excellent weather resistance and water resistance may be obtained.

In the present invention, a commercially available polyurethane resin can also be used, and for example, cationic or nonionic polyurethane resin fine particles may be preferably used.

Examples of the cationic polyurethane resin particles are: "Superflex 620" and "Superflex 650" ("Superflex" is a registered trademark of Dai-ichi Kogyo Seiyaku Co., Ltd.) and "PERMARIN UC-20" ("PERMARIN " is a registered trademark of Sanyo Chemical Industries, Ltd.), and "Parasurf UP-22" made by Ohara Palladium Chemical Co., Ltd.

Examples of the nonionic polyurethane resin particles are: "Superflex 500M" and "Superflex E-200" made by Dai-ichi Kogyo Seiyaku Co., Ltd.

### (Composite resin particles)

The composite resin particles according to the present invention are composite resin particles in which a polyolefin resin is contained in a polyurethane resin. It is preferable that polyolefin resin is emulsified by the polyurethane resin which has the said hydrophilic group, and is made to become a composite resin. That is, in the composite resin particles, the polyurethane resin is present at the interface between the polyolefin resin as the water insoluble resin and water as the continuous phase, and functions as a water insoluble resin layer different from the resin protecting the water insoluble resin. As described above, the composite resin particles formed by emulsifying the polyolefin resin with the polyurethane resin can suppresses the decrease in the compatibility with the polyurethane resin, the coagulant and the cross-linking agent that may occur in the case of the polyolefin resin alone. Moreover, compared with the case where polyolefin resin and polyurethane resin are respectively emulsified and mixed simply, the film physical properties may be improved, and the stability of the pretreatment liquid according to the present invention may be improved.

It is preferable that a content mass ratio (U/O) value of the polyurethane resin (U) and the polyolefin resin (O) in the composite resin particles is in the range of 40/60 to 95/5. More preferably, it is in the range of 40/60 to 70/30. When the existing ratio of the polyurethane resin is in the above range, there is a tendency that the compatibility with the dispersant is improved, and the solvent resistance is also excellent. Moreover, when the existing ratio of the polyolefin resin is in the above range, it is excellent in the adhesiveness to a polyolefin film substrate.

The total resin concentration of the combination of the polyolefin resin and the polyurethane resin in the composite resin particles is not particularly limited, but it is usually 5 mass% or more, and preferably in the range of 10 to 70 mass%.

At the time of emulsification, a surfactant may be used as an emulsifier together with the above-mentioned polyurethane resin. That is, the composite resin particles according to the present invention may further contain a surfactant as an emulsifier. The addition of the surfactant can further improve the storage stability of the composite resin particles.

As such a surfactant, it is preferable to use either or both of an anionic surfactant and a nonionic surfactant. It is preferable to blend these anionic surfactant and nonionic surfactant in the range of 1 to 20 mass parts in total of both active agents with respect to 100 mass parts of the total resin mass. When the amount is 20 mass parts or less, water resistance and solvent resistance tend to be excellent.

The value of the blending mass ratio (X/Y) of the anionic surfactant (X) to the nonionic surfactant (Y) is preferably in the range of 100/0 to 50/50. By making the blending quantity of an anionic surfactant in the said range, emulsifying ability and storage stability may be improved more.

Examples of the anionic surfactant are: alkyl sulfate, polyoxyethylene alkyl ether sulfate, sulfosuccinate, alpha olefin sulfonate, N-acyl amino acid salt, carboxylate, and phosphate ester. Among these, sulfosuccinate and alpha olefin sulfonate are preferable. Further, the type of salt is not particularly limited, but preferred are metal salts such as sodium salt, potassium salt and magnesium salt, and triethanolamine salt.

Examples of the nonionic surfactant are: Polyoxyethylene alkyl ethers, polyoxyethylene alkylphenyl ethers, polyoxyethylene alkylamine ether, polyoxyethylene fatty acid ester, sorbitan fatty acid ester, and sucrose fatty acid ester. Among these, polyoxyethylene alkyl ethers and polyoxyethylene alkyl phenyl ethers are preferable.

In the composite resin particles according to the present invention, an antioxidant, a light-resistant agent, a plasticizer, a foaming agent, a thickener, a coloring agent, a flame retardant, other aqueous resin and various fillers may be added in an amount of not inhibiting the effect of the present invention.

Antioxidants include, for example, solutions or emulsions of antioxidants such as hindered phenols or semicarbazides.

Examples of the light-resistant agent include solutions or emulsions of light-resistant agents such as hindered amines (HALS), benzophenones, and benzotriazoles.

Next, a method of producing composite resin particles will be described.

The composite resin particles described above may be prepared by the following production method (I) or (II).
(I) A method in which a polyolefin resin is emulsified in water with a urethane prepolymer having a hydrophilic group, and then an amine as a chain extender or an aqueous solution thereof is added to chain-extend the urethane prepolymer (to obtain a high molecular weight compound).
(II) A method in which a urethane prepolymer having a hydrophilic group is emulsified in water, and further, an amine as a chain extender or an aqueous solution thereof is added to chain-extend the urethane prepolymer to prepare an aqueous dispersion of a polyurethane resin, and then a polyolefin resin is emulsified with the aqueous dispersion of polyurethane resin. First, an embodiment according to the manufacturing method (I) will be described.

In this method, first, a resin solution obtained by dissolving a polyolefin resin in a solvent and a solution of a urethane prepolymer having a hydrophilic group are mixed, water is added to the mixture, and the mixture is stirred.

Examples of the solvent include organic solvents such as hexane, isohexane, pentane, cyclohexane, methylcyclohexane, heptane, isooctane, methyl ethyl ketone, xylene, toluene and benzene, and solvents other than water such as carbon dioxide in a supercritical state.

These may be used alone or in combination of two or more.

The emulsification method may be any method such as known forced emulsification method, phase inversion emulsification method, D-phase emulsification method, and gel emulsification method. The equipment used may be, for example, single stirring with a stirring blade, a disper mixer and a homogenizer. It is also possible to use combined stirring combining these, a sand mill, or a multi-screw extruder. In addition, the surfactant may be mixed with the urethane pre-polymer during the emulsification.

Then, after diluting the above-mentioned emulsion with water, an amine as a chain extender is added, and the remaining isocyanate group of the urethane prepolymer is crosslinked by the chain extender, and the polyurethane resin is polymerized. Thereafter, by distilling off the organic solvent, a composite resin particle dispersion (that is, a dispersion in which water insoluble resin particles are dispersed) containing a polyolefin resin inside the polyurethane resin is obtained.

In the composite resin particle dispersion thus obtained, when the polyolefin resin is a modified polyolefin, the acid component introduced into the polymer may be neutralized by adding a basic substance. By ionizing the same portion by neutralization, the composite resin particle dispersion may further increase the stability because the polymer molecules are elongated and the entire system causes a viscosity increase. In this case, the desired pH may be adjusted by the addition amount of the basic substance.

The basic substance to be used is not particularly limited as long as it can neutralize the acid moiety in the polyolefin resin. Examples thereof are: organic basic substance such as methylamine, ethylamine, propylamine, butylamine, hexylamine, octylamine, ethanolamine, propanolamine, dimethylamine, diethylamine, dipropylamine, dipropylamine, dibutylamine, dihexylamine, dioctylamine, diethanolamine, dipropanolamine, N-methyldiethanolamine, triethylamine, N,N-dimethylethanolamine, 2-dimethylamino-2-methyl-1-propanol, 2-amine-2-methyl-1-propanol, and morpholine; and inorganic basic substance such as an aqueous ammonia solution, sodium hydroxide, potassium hydroxide, sodium carbonate, sodium hydrogencarbonate, ammonium carbonate, and potassium carbonate. When these basic substances are used, the purpose of the present invention may often be achieved more effectively by using two or more types of basic substances in combination. In addition, when an amine is used as a basic substance, a tertiary amine is used so that it may not react with free isocyanate as what is added before making a urethane prepolymer chain-extend. On the other hand, when neutralizing modified polyolefin after chain extension, any of primary, secondary and tertiary amines may be used.

The amount of the basic substance used for neutralization varies depending on the degree of modification of the modified polyolefin, and it is preferably in the range of 0.1 to 10 mass parts with respect to 100 mass parts of the modified polyolefin. When the amount of the basic substance is 0.1 mass parts or more, the pH becomes neutral, and as a result, the storage stability of the composite resin particle dispersion is improved. On the other hand, when the amount of the basic substance is 10 mass parts or less, the storage stability of the composite resin particle dispersion is good, the basicity is not strong, and a large amount of hydrophilic substance is not introduced into the coating film. Thereby, water resistance is improved.

Next, an embodiment according to the manufacturing method (II) will be described.

In this method, first, water is added to a solution of a urethane prepolymer having a hydrophilic group to emulsify. Then, an amine as a chain extender is added to the obtained emulsion, and the remaining isocyanate group of the urethane prepolymer is cross-linked with the chain extender to prepare an aqueous dispersion of a polymerized polyurethane resin.

Thereafter, a resin solution obtained by dissolving a polyolefin resin in a solvent and the aqueous dispersion of the polyurethane resin having a hydrophilic group obtained above are mixed. Thereby, the polyolefin resin is emulsified with the polyurethane resin having the hydrophilic group. Then, after diluting with water, the organic solvent is distilled off to obtain a composite resin particle dispersion (that is, a dispersion in which water insoluble resin particles are dispersed) containing a polyolefin resin in the inside of the polyurethane resin.

The solvent and the emulsification method in the method (II) are the same as in the method (I). Also in the method (II), a surfactant may be mixed with the above-mentioned polyurethane resin upon emulsification of the polyolefin resin. Furthermore, in the obtained composite resin particle dispersion, the modified polyolefin may be neutralized with a basic substance, as in the above method (I).

The average particle diameter of the composite resin particles is not particularly limited, but it is preferably in the range of 10 to 500 nm, more preferably in the range of 10 to 300 nm, and still more preferably in the range of 10 to 200 nm.

The average particle size may be measured by a commercially available particle size measuring instrument using a dynamic light scattering method or an electrophoresis method. The measurement by the dynamic light scattering method is simple, and the particle diameter range may be measured accurately.

### (Coagulant)

The pre-treatment liquid according to the present invention contains a material that causes aggregation when brought into contact with an ink-jet ink containing a pigment, that is, a coagulant. Thereby, the interaction with the ink-jet ink is increased, and the dots of the water-soluble ink may be further fixed.

The coagulant preferably contains any of a cationic resin, a metal chelating agent, a polyvalent metal salt and an organic acid, and more preferably contains any of a polyvalent metal salt and an organic acid.

The cationic resin and the polyvalent metal salt can aggregate an anionic component (usually, a coloring material or a pigment) in the ink-jet ink by salting out. The organic acid can aggregate anionic components in the ink-jet ink by pH fluctuation.

Examples of the cationic resin include polyallylamine, polyvinylamine, polyethyleneimine and polydiallyldimethyl ammonium chloride.

Examples of the metal chelating agent include metal chelate compounds in which acetylacetone having a nitrogen containing group, methyl acetoacetate, ethyl acetoacetate, ethyl lactate, or methyl salicylate is coordinated with a metal such as aluminum, zinc, cadmium, nickel, cobalt, copper, calcium, barium, titanium, manganese, iron, lead, zirconium, chromium, or tin.

Examples of the polyvalent metal salt include water soluble salts such as calcium salt, magnesium salt, aluminum salt and zinc salt.

The organic acid contained in the pretreatment liquid is capable of aggregating a pigment which may be contained in the ink-jet ink, and the first dissociation constant is preferably 3.5 or less, more preferably in the range of 1.5 to 3.5. Within this range, the liquid deviation in the low density portion where the printing rate is low is further prevented, and the beading in the high density portion where the printing rate is high is further improved.

It is preferable to use an organic acid which is not completely neutralized by a base. Neutralization with a base means that the acid group of these acids and another positively charged element or compound (for example, an inorganic compound such as a metal) are ionically bonded. Moreover, "not completely neutralized" means that the acidic group which has not formed the said ionic bond exists among the acidic groups possessed by the organic acid. By using an organic acid having an acidic group which does not form an ionic bond, the compatibility with the composite resin particles having a polyurethane structure contained in the pretreatment liquid is high, and a transparent pretreatment layer may be formed. Thereby, it is assumed d that the color tone of the formed image is brighter than in the case of using a polyvalent metal salt. In addition, the storage stability of the pretreatment liquid may be easily maintained by using an organic acid, and blocking does not easily occur after the pretreatment liquid is applied and dried. Preferred organic acids from the above viewpoints are: formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, acrylic acid and derivatives thereof, methacrylic acid and derivatives thereof, and compounds having a carboxy group including acrylamide and derivatives thereof, sulfonic acid derivatives, phosphoric acid and derivatives thereof.

The content of the organic acid in the pretreatment liquid may be such that the pH of the pretreatment liquid is adjusted to less than the first dissociation constant of the organic acid. By containing the organic acid in an amount such that the pH of the pretreatment liquid is less than the first dissociation constant of the organic acid in the pretreatment liquid, bleeding during high speed printing may be effectively suppressed.

The coagulant is preferably present in the range of 0.1 to 20 mass% in the above-mentioned pretreatment liquid in that the anionic component in the ink-jet ink may be effectively aggregated.

The content of the coagulant in an aqueous solution may be measured by a known method. For example, when the coagulant is a polyvalent metal salt, the content may be measured by ICP emission analysis, and when the coagulant is an acid, the content may be measured by high performance liquid chromatography (HPLC).

In the case of using an organic acid, the added amount of the organic acid is preferably an amount to adjust the pH of the pretreatment liquid below neutralization equivalent of anionic component contained in the ink-jet ink. When the anion component is a compound having a carboxy group, the first dissociation constant of the organic acid is preferably 3.5 or less from the viewpoint of making it difficult to cause bleeding of the image.

The application amount of the pretreatment liquid of the present invention is not particularly limited, and may be appropriately adjusted. For example, when the coagulant is a polyvalent metal salt, it is preferable to set the amount of polyvalent metal salt within the range of 0.1 to 20 g/m². When the coagulant is an organic acid, the amount of the organic acid applied is preferably equal to or less than the neutralization equivalent of the anion component in the water-soluble ink.

### (Water and other additives)

The water contained in the pretreatment liquid according to the present invention is not particularly limited, and may be ion-exchanged water, distilled water, or pure water.

As a solvent of the pretreatment liquid according to the present invention, an organic solvent may be contained in addition to water. The solvent may be removed at the time of drying of the pretreatment liquid.

In the pretreatment liquid, other components such as a surfactant, a cross-linking agent, an antifungal agent, and a germicide may be appropriately blended, as long as the effects of the present invention are not impaired.

Examples of the other compounds are as follows: UV absorbers described in JP-A 57-74193, JP-A 57-87988 and JP-A 62-261476; antifading agents, anion, cationic or nonionic surfactants described in JP-A 57-74192, JP-A 57-87989, JP-A 60-72785, JP-A 61-146591, JP-A 1-95091 and JP-A 3-13376; fluorescent whitening agents, antifoamers, lubricant such as diethylene glycol, preservatives, thickeners, antistatic agents, and various known additives described in JP-A 59-42993, JP-A 59-52689, JP-A 62-280069, JP-A 61-242871 and JP-A 4-219266.

It is preferable to prepare a pretreatment layer by directly applying and drying the pretreatment liquid according to the present invention as a coating liquid on a substrate. Here, the additive preferably used in the pretreatment liquid is preferably used as a coating liquid after being sufficiently dispersed.

Examples of a preferable coating method of the pretreatment liquid are: a roll coating method, a rod bar coating method, an air knife coating method, a spray coating method, a curtain coating method and an extrusion coating method using a hopper as described in U.S. Pat. No. 2,681,294.

### 3. Ink

The ink according to the ink-jet recording liquid set of the present invention contains at least a pigment, a compound having an oxazoline group, and water. In particular, it contains a compound having an oxazoline group as a cross-linking agent. In the present invention, the cross-linking agent refers to a compound having a cross-linking group.

### (Compound having an oxazoline group)

The compound having an oxazoline group is a resin having an oxazoline group in its structural skeleton (hereinafter referred to as an oxazoline group-containing resin).

One of the functions of the oxazoline group-containing resin is to improve the water resistance of an image formed by the ink composition. In particular, the oxazoline group in the oxazoline group-containing resin is likely to react with an organic acid to form a cross-linked structure (amide ester bond). Therefore, since the network structure is finally formed, the coloring agent may be hooked on the network structure to improve the fixing property.

The oxazoline group-containing resin is not particularly limited as long as it is a substance containing an oxazoline group. Examples thereof are: 2-oxazoline, 2-methyl-2-oxazoline, 2-ethyl-2-oxazoline, 2-(n-propyl)-2-oxazoline, 2-(isopropyl)-2-oxazoline, 2-cyclohexyl-2-oxazoline, 2-phenyl-2-oxazoline, 2-pyrrolidinyl-2-oxazoline, 2-acetyl-2-oxazoline, 2-(2-propene)-2-oxazoline, 4,5-dimethyl-2-oxazoline, 2,4,4-trimethyl-2-oxazoline, 5-phenyl-2-(2-propynylamino)-2-oxazoline-4-one, and 4-ethoxymethylene-2-phenyl-2-oxazoline-5-one. EPOCROS Series K-1010E, K-2010E, K-1020E, K-2020E, K-1030E, K-2030E, WS-300, WS-500, WS-700, and RPS-1005 (made by Nippon Shokubai Co., Ltd.) may be used preferably. The oxazoline group-containing resin may be used alone or in combination of two or more.

Further, fine particles having an oxazoline group adsorbed on the surface are also available as commercial products, and may be organic fine particles or inorganic fine particles.

Examples of the organic particles having an oxazoline group are: ME series of Soken Chemical & Engineering Co., Ltd., JURYMER MB series of Nippon Pure Chemicals Co., Ltd., TOSPEARL series of Toshiba Silicone Co., Ltd., Microgel series of Nippon Paint Co., Ltd., and Pull-on series of Asahi Glass Co., Ltd. Examples of the inorganic particles having an oxazoline group are: Titania series of Idemitsu Co., Ltd., and Aluminium oxide C of Nippon Aerosil Co., Ltd.

The weight average molecular weight of the oxazoline group-containing resin is in the range of 20,000 to 120,000, and more preferably in the range of 20,000 to 80,000. When the weight average molecular weight of the oxazoline group-containing resin is in the above range, it becomes easy to dissolve in the solvent (water) in the ink composition. The weight average molecular weight of the oxazoline group-containing resin may be determined, for example, by a polystyrene conversion molecular weight measured by gel permeation chromatography (GPC) using tetrahydrofuran as a solvent.

The content of the oxazoline group-containing resin is preferably in the range of 3 to 20 mass%, and more preferably in the range of 5 to 10 mass% in terms of solid content with respect to the total mass of the ink composition.

### (Pigment)

As the pigment contained in the ink according to the present invention, it is possible to use an anionic dispersing pigment, for example, an anionic self-dispersing pigment or a pigment dispersed with an anionic polymer dispersing agent. In particular, one in which the pigment is dispersed by an anionic polymer dispersant is preferable.

As the pigment, conventionally known pigments may be used without particular limitation, and, for example, organic pigments such as insoluble pigments and lake pigments, and inorganic pigments such as titanium oxide may be preferably used.

In addition, in the case of titanium oxide in which it is generally difficult to ensure the ink discharge stability and the adhesion, the present invention can particularly preferably prevent bleeding and improve the adhesion.

There are three crystal forms of titanium dioxide, anatase type, rutile type and brookite type, but as general purpose ones, it may be divided roughly into anatase type and rutile type. Although not particularly limited, rutile type which has a large refractive index and high covering ability is preferable. Specifically, TR series of Fuji titanium industry Co., Ltd., JR series of Tayca Co., Ltd., and TIPAQUE series of Ishihara Sangyo Co., Ltd. may be mentioned.

The insoluble pigment is not limited. Preferable examples of the insoluble pigment are: azo, azomethine, methine, diphenylmethane, triphenylmethane, quinacridone, anthraquinone, perylene, indigo, quinophthalone, isoindolinone, isoindoline, azine, oxazine, thiazine, Dioxazine, thiazole, phthalocyanine, and diketopyrrolopyrrole pigments.

Specific organic pigments that may be preferably used include the following pigments.

Examples of a magenta or red pigment are: C. I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48: 1, C.I. Pigment Red 53: 1, C.I. Pigment Red 57: 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of an orange or yellow pigment are: C. I. Pigment Orange 31, C.I. Pigment Orange 43, C.I. Pigment Yellow 12, C.I. Pigment Yellow 13, C.I. Pigment yellow 14, C.I. Pigment Yellow 15, C.I. Pigment Yellow 15: 3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. In particular, in view of the balance of color tone and light resistance, C.I. Pigment Yellow 155 is preferred.

Examples of a green or cyan pigment are: C. I. Pigment Blue 15, C.I. Pigment Blue 15: 2, C.I. Pigment Blue 15:3, C.I. Pigment Blue 16, C.I. Pigment Blue 60, and C.I. Pigment Green 7.

Examples of a black pigment are: C. I. Pigment Black 1, C.I. Pigment Black 6, and C.I. Pigment Black 7.

### (Pigment dispersant)

The pigment dispersant used to disperse the pigment is not particularly limited, and it is preferably a polymer dispersant having an anionic group, and those having a molecular weight in the range of 5,000 to 200,000 may be suitably used.

Examples of the polymer dispersant are: styrene, styrene derivatives, vinyl naphthalene derivatives, acrylic acid, acrylic acid derivatives, maleic acid, maleic acid derivatives, itaconic acid, itaconic acid derivatives, fumaric acid,
block copolymers having a structure derived from two or more monomers selected from fumaric acid derivatives, random copolymers and salts thereof, polyoxyalkylenes, and polyoxyalkylene alkyl ethers.

The polymer dispersant preferably has an acryloyl group, and is preferably neutralized with a neutralizing base and added. The neutralizing base is not particularly limited, and it is preferably an organic base such as ammonia, monoethanolamine, diethanolamine, triethanolamine or morpholine. In particular, when the pigment is titanium oxide, the titanium oxide is preferably dispersed by a polymer dispersant having an acryloyl group.

The addition amount of the polymer dispersant is preferably in the range of 10 to 100 mass%, and more preferably in the range of 10 to 40 mass% with respect to the pigment.

It is particularly preferred that the pigment is in the form of a so-called capsule pigment, in which the pigment is coated with the above-mentioned polymeric dispersant. Various known methods may be used to coat the pigment with the polymer dispersant. For example, a phase inversion emulsification method, an acid precipitation method, or a method of dispersing a pigment with a polymerizable surfactant is performed, then, supplying a monomer thereto, and coating while polymerizing may be preferably exemplified.

Particularly preferable method is a follows: a water insoluble resin is dissolved in an organic solvent such as methyl ethyl ketone, and the acid group in the resin is partially or completely neutralized with a base; then, a pigment and ion-exchange water is added and the mixture is dispersed; thereafter, the organic solvent is removed and water is added according to necessity.

The average particle diameter of the pigment in the ink in the dispersed state is preferably 50 nm or more and less than 200 nm. Thereby, the dispersion stability of the pigment may be improved, and the storage stability of the ink may be improved. The particle size of the pigment may be measured by a commercially available particle size measuring instrument using a dynamic light scattering method or an electrophoresis method. The measurement by the dynamic light scattering method is simple, and the particle diameter range may be measured accurately.

The pigment may be used after being dispersed with a disperser together with a dispersant and other necessary additives depending on the desired purposes.

As a dispersing machine, a ball mill, a sand mill, a line mill, and a high pressure homogenizer, which are conventionally known, may be used. Among them, dispersing the pigment by a sand mill is preferable because the particle size distribution becomes sharp. The material of the beads used for sand mill dispersion is not particularly limited, and it is preferably zirconia or zircon from the viewpoint of preventing formation of bead fragments and contamination of ionic components. Furthermore, the bead diameter is preferably in the range of 0.3 to 3 mm.

The content of the pigment in the ink is not particularly limited, and a range of 7 to 18 mass% is preferable for titanium oxide, and a range of 0.5 to 7 mass% is preferable for an organic pigment.

### (Organic solvent)

As the organic solvent contained in the ink, a water-soluble organic solvent may be suitably used. Examples of the water-soluble organic solvent include: alcohols, polyhydric alcohols, amines, amides, glycol ethers, and 1,2-alkanediols having 4 or more carbon atoms.

Examples of the alcohol are: methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, and benzyl alcohol.

Examples of the polyhydric alcohol are: ethylene glycol, diethylene glycol, triethylene glycol, tetraethylene glycol, polyethylene glycol having 5 or more ethylene oxide groups, propylene glycol, dipropylene glycol, tripropylene glycol, polypropylene glycol having 4 or more propylene oxide groups, butylene glycol, hexanediol, pentanediol, glycerin, hexanetriol, and thiodiglycol.

Examples of the amine are: ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amide are: Fformamide, N,N-dimethylformamide, and N,N-dimethylacetamide.

Examples of the glycol ether are: ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediol having 4 or more carbon atoms are: 1,2-butanediol, 1,2-pentanediol, 1,2-hexanediol, and 1,2-heptanediol.

The organic solvent which is particularly preferably used is a polyhydric alcohol, and bleeding at the time of high speed printing may be suitably suppressed. Preferable examples thereof are: ethylene glycol, diethylene glycol, triethylene glycol, tetraethylene glycol, propylene glycol, dipropylene glycol, and tripropylene glycol.

The ink may contain one or more selected from these organic solvents in combination.

The content of the organic solvent in the ink is not particularly limited. It is preferably in the range of 10 to 60 mass%.

### (Water and other additives)

The water contained in the ink-jet ink according to the present invention is not particularly limited, and may be ion-exchanged water, distilled water, or pure water.

The ink according to the present invention may contain various known agents as needed according to the purpose of improving ejection stability, print head and ink cartridge compatibility, storage stability, image storability, and other various performances.

The ink may also contain a surfactant. As a result, the ink ejection stability may be improved, and the spread (dot diameter) of droplets landed on the recording medium may be controlled.

The surfactant that may be used in the ink according to the present invention may be used without particular limitation, but when the other component of the ink contains an anionic compound, the ionic property of the surfactant is an anion, a nonionic or a betaine type is preferred.

In the present invention, preferably used surfactants are as follows: fluorine-based or silicone-based surfactants with high ability to reduce static surface tension; anionic surfactants such as dioctyl sulfosuccinate with high ability to reduce dynamic surface tension; relatively low molecular weight polyoxyethylene alkyl ether and polyoxyethylene alkyl phenyl ether; acetylene glycols; Pluronic type surfactants; and nonionic surfactants such as sorbitan derivatives. It is also preferable to use a combination of a fluorine-based or silicone-based surfactant and a surfactant having a high ability to reduce dynamic surface tension.

The content of the surfactant in the ink is not particularly limited, and it is preferably in the range of 0.1 to 5.0 mass%.

In the ink used in the present invention, in addition to those described above, according to the purpose of improving the ejection stability, print head and ink cartridge compatibility, storage stability, image storability, and other various performances, as necessary, various additives known in the art may be used. Examples thereof are: polysaccharides, viscosity modifiers, resistivity modifiers, film-forming agents, UV absorbers, antioxidants, anti-fading agents, anti-glare agents, and anti-rust agents. They are appropriately selected and used. Specific examples are: oil droplets made of such as liquid paraffin, dioctyl phthalate, tricresyl phosphate, and silicone oil; UV absorbers described in JP-A 57-74193, JP-A 57-87988, and JP-A 62-261476; antifading agents described in JP-A 57-74192, JP-A 57-87989, JP-A 60-72785, JP-A 61-146591, JP-A 1-95091 and JP-A 3-13376; fluorescent whitening agents described in JP-A 59-42993, JP-A 59-52689, JP-A 62-280069, JP-A 61-242871, and JP-A 4-219266.

The viscosity of the ink used in the present invention having the above constitution is preferably 1 to 40 mPa·s at 25 °C, and more preferably 2 to 10 mPa·s.

### 4. Ink-jet recording method

The ink-jet recording method of the present invention uses the above-mentioned ink-jet recording liquid set. In the case of a method using this ink-jet recording liquid set, for example, application of a pretreatment liquid constituting the ink-jet recording liquid set of the present invention on the surface of a non-absorptive substrate; and printing with the ink may be performed continuously and efficiently using a single ink-jet printer. Then, it becomes possible to print characters and patterns with excellent image quality and less variation in dot diameter between the substrates.

For example, when characters and patters are printed in full-color, an ink set composed of 4 colors of cyan (C), magenta (M), yellow (Y), and black (K), or 6 colors of adding light cyan (LC) and light magenta (LM), and a pretreatment liquid is loaded in the ink supply unit (ink cartridges) of one ink-jet printer.

Then, first, from the supply unit loaded with the pretreatment liquid, the pretreatment liquid is applied on the surface of the non-absorptive substrate such as the polyolefin-based plastic through the nozzle of the head in the region which will be printed with arbitrary characters and patterns using an ink or in the entire surface of the substrate to form a pretreatment layer.

Next, after drying the pretreatment layer as necessary, the ink of each color is applied to the surface from the respective supply parts through the nozzles of the head. Corresponding to the formed image, the ink is discharged sequentially and intermittently, as in the case of the ordinary ink-jet printing method. Thus, it is possible to print arbitrary characters and designs on the surface of the non-absorptive substrate.

The ink-jet head that may be used in the present invention may be an on-demand system or a continuous system. Further, as a discharge method, any discharge method such as an electro-mechanical conversion method (for example, single cavity type, double cavity type, bender type, piston type, shear mode type, and shared wall type), an electro-thermal conversion method (for example, thermal in-jet), and a bubble jet (registered trademark) mold may be used.

The transport speed of the recording medium may be set, for example, between 1 m/min and 120 m/min. The faster the transport speed, the faster the image forming speed. According to the present invention, the occurrence of bleeding is further suppressed even at a very high linear velocity of 50 m/min or more and 120 m/min or less, which is applicable in the single-pass inkjet image forming method, and an image having high adhesion may be obtained.

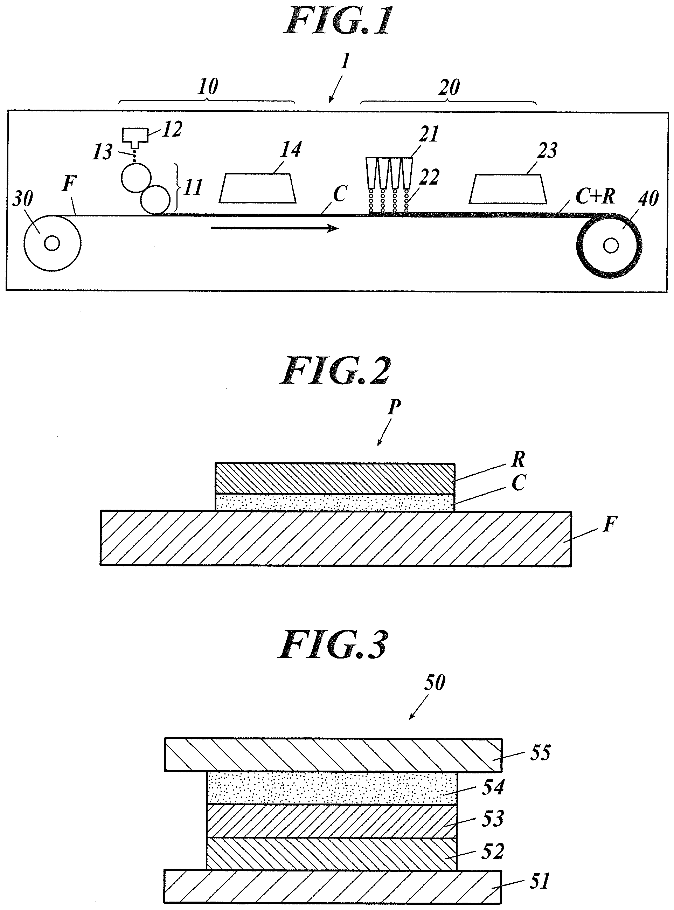

FIG. 1 is a schematic view of a pretreatment/ink-jet recording apparatus preferred for the present invention. However, the present invention is not limited to this. For example, in the pretreatment/ink-jet recording apparatus 1 illustrated in FIG. 1, the first drying unit 14 may be omitted.

The pretreatment/ink-jet recording apparatus 1 mainly includes a precoat application unit 10 and an IJ printing unit 20. In the precoat application unit 10, a pretreatment layer C is formed on a substrate F, and a printing layer R is formed by the IJ printing unit 20.

Specifically, pretreatment droplets 13 ejected from nozzles 12 by a roll coater 11 are applied onto the substrate F drawn out from a delivery roller 30, and the pretreatment layer C is formed. Subsequently, the pretreatment layer C is dried by the first drying unit 14.

Next, ink droplets 22 are discharged from an ink-jet head 21 onto the pretreatment layer C to form the printing layer R, and after drying by a second drying unit 23, the pretreatment layer C and the printing layer are taken up by a winding roller 40. The substrate F in which the pretreatment layer C and the printing layer R were formed is wound up.

### 5. Printed matter

The printed matter of the present invention comprises a substrate, a pretreatment layer formed on the substrate using the pretreatment liquid for the ink-jet recording liquid set of the present invention, and a printing layer formed on the pretreatment layer using the ink.

As illustrated in FIG. 2, a printed matter (P) is obtained by discharging the pretreatment liquid according to the present invention from an ink-jet head on a substrate (F) to form a pretreatment layer (C), the ink is discharged from an ink-jet head at a position where the pretreatment layer (C) is fixed, and the ink is fixed to form a printing layer (R).

The above configuration indicates the minimum configuration, and another functional layer may be formed between the substrate and the pretreatment layer. In addition, a non-absorptive film substrate may be bonded to the upper layer of the printing layer, for example, through a laminating adhesive layer. At least the configuration in which the pretreatment layer and the printing layer are in contact is essential.

Although the embodiments of the present invention have been described and illustrated in detail, the disclosed embodiments are made for purpose of illustration and example only and not limitation. The scope of the present invention should be interpreted by terms of the appended claims.

### Examples

Hereinafter, the present invention will be specifically described by referring to examples, but the present invention is not limited thereto. In addition, although the term "part" or "%" is used in examples, unless otherwise indicated, it represents "mass part" or "mass%".

### <Ink-jet recording liquid sets 1 to 35>

### <<Preparation of Pretreatment liquid>>

### <<Preparation of urethane polymer solution>>

A urethane polymer solution was prepared as follows.

### <Preparation of Urethane polymer solution U1>

Into a four-necked flask equipped with a stirrer, reflux condenser, thermometer and nitrogen bubbler, 182.0 mass parts of polyester polyol (trade name Teslac 2461, manufactured by Hitachi Chemical Co., Ltd.), 22.0 mass parts of polyethylene glycol (PEG, molecular weight 600, trade name PEG 600, Daiichi Kogyo Seiyaku Co., Ltd.), 5.6 mass parts of trimethylol propane, 43.8 mass parts of N-methyl-N,N-diethanolamine, 204 mass parts of 4,4'-dicyclohexylmethane diisocyanate, and 216 mass parts of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

46.4 mass parts of dimethyl sulfate were added to this urethane prepolymer and reacted at 60 °C for 60 minutes. Thereby a methyl ethyl ketone solution of a cationic urethane prepolymer U 1 was obtained. A content of NCO was 2.2% and a nonvolatile content was about 50%.

### <Preparation of Urethane polymer solution U2>

Into a four-necked flask equipped with a stirrer, reflux condenser, thermometer and nitrogen bubbler, 182.0 mass parts of polycarbonate polyol (molecular weight 1000, trade name Nipporan 981, Nippon Polyurethane Industry Co., Ltd.), 22.0 mass parts of polyethylene glycol (PEG, molecular weight 600, trade name PEG 600, Daiichi Kogyo Seiyaku Co., Ltd.), 5.6 mass parts of trimethylol propane, 43.8 mass parts of N-methyl-N,N-diethanolamine, 204 mass parts of 4,4'-dicyclohexylmethane diisocyanate, and 216 mass parts of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

46.4 mass parts of dimethyl sulfate were added to this urethane prepolymer and reacted at 50 to 60 °C for 30 to 60 minutes. Thereby a methyl ethyl ketone solution of a cationic urethane prepolymer U2 was obtained. An NCO content was 2.2% and a nonvolatile content was about 50%.

### <Preparation of Urethane polymer solution U3>

Into a four-necked flask equipped with a stirrer, reflux condenser, thermometer and nitrogen bubbler, 182.0 mass parts of polyether polyol (PolyTHF 2000, made by BASF Corporation), 22.0 mass parts of polyethylene glycol (PEG, molecular weight 600, trade name PEG 600, Daiichi Kogyo Seiyaku Co., Ltd.), 5.6 mass parts of trimethylol propane, 43.8 mass parts of N-methyl-N,N-diethanolamine, 204 mass parts of 4,4'-dicyclohexylmethane diisocyanate, and 216 mass parts of methyl ethyl ketone (MEK) were loaded (added amount of tertiary amine: 9.6 mass%; and added amount of PEG: 4.8 mass%). The reaction was carried out while maintaining the reaction mixture at 75 °C to obtain a urethane prepolymer.

46.4 mass parts of dimethyl sulfate were added to this urethane prepolymer and reacted at 50 to 60 °C for 30 to 60 minutes. Thereby a methyl ethyl ketone solution of a cationic urethane prepolymer U3 was obtained. An NCO content was 2.2% and a nonvolatile content was about 50%.

### <<Preparation of Composite resin particle dispersion>>

Composite resin particle dispersions A to K were prepared as follows.

### <Preparation of Composite resin particle dispersion A>

Into a four-necked flask equipped with a stirrer, reflux condenser, thermometer and nitrogen bubbler, 30.0 mass parts of polyolefin resin (trade name: AUROREN 150S, manufactured by Nippon Paper Industries Co., Ltd.), 240.0 mass parts of methylcyclohexane, and 48.0 mass parts of methyl ethyl ketone were loaded. The temperature of the mixture was raised to 80 ° C and dissolved by heating. After dissolution, the internal temperature was kept at 40 °C, and 194 mass parts of a urethane prepolymer solution U1 (nonvolatile content: about 50%) was added and mixed. 58.0 mass parts of water was added to this solution and emulsified using a homogenizer. Thereafter, 260 mass parts of water was gradually added and diluted, and an aqueous solution in which 1.0 mass part of ethylene diamine and 12 mass parts of water were mixed was gradually added thereto, and the mixture was stirred for 1 hour to perform polymerization. The solvent was removed under reduced pressure at 50 °C to obtain a composite resin particle dispersion A described in Table I having a nonvolatile content (solid content as particles) of about 30 mass%.

### <Preparation of Composite resin particle dispersions B to I>

Composite resin particle dispersions B to I each having a nonvolatile content (solid content as particles) of about 30 mass% were prepared in the same manner as preparation of the composite resin particle dispersion A except that the content ratio of the solid content (U/O) of the urethane prepolymer solution (U1) and the polyolefin resin (O) was changed as described in Table I.

### <Preparation of Composite resin particle dispersions J and K>

Composite resin particle dispersions J and K were prepared in the same manner as preparation of the composite resin particle dispersion H except that the above-described urethane prepolymer solutions (U2 an U3) were used.

### <<Preparation of Pretreatment liquid>>

### <Preparation of Pretreatment liquid 1>

After sequentially adding each additive indicated below with stirring, the mixture was filtered with a 5.0 µm filter to obtain a pretreatment liquid 1. There was no substantial change in composition before and after filtration.

| | |
|---|---|
| Composite resin particle dispersion A (emulsified composite resin particle dispersion having a content mass ratio (U/O) of 97/3 and solid content of 30 mass%, using AUROREN 150S as a urethane polymer solution and a polyolefin resin solution: | 14.0 mass parts |
| Coagulant PAS-1 (cationic polymer, made by Nittobo Medical Co., Ltd.): | 5.0 mass parts |
| Ion-exchanged water: | An amount that makes the total amount of 100 mass parts |

In an Example, a resin in a pretreatment liquid composition and a coagulant compounding quantity (mass part) are the value converted into solid content.

### <Preparation of Pretreatment liquids 2 to 35>

Pretreatment liquids 2 to 35 were prepared in the same manner as preparation of the pretreatment liquid 1 except that the type of the composite resin particle dispersion, and the type and blending amount (content) of the coagulant were changed as described in Table I.

The details of the materials used are described below.

Polyester: PES Resin A-645 GEX (manufactured by UNITICA Ltd.)
Polyurethane: Superflex 650 (manufactured by Daiichi Kogyo Seiyaku Co., Ltd.)
Polyolefin: SUPERCHLON E-415 (manufactured by Nippon Paper Industries Co., Ltd.)

### «Preparation of ink»

### [Preparation of Ink 1]

### [Preparation of Pigment dispersion-1]

A mixture of 18 mass% of pigment (Pigment Blue 15:3), 31.5 mass% of pigment dispersant (an acrylic dispersant "Joncryl 918" having a carboxyl group neutralized with sodium hydroxide, acid value of 75 mg KOH/g, solid content 20 mass%, made by BASF Corporation), 20 mass% of ethylene glycol, and ion-exchanged water (residual amount: an amount that makes the total amount of 100 mass parts) was pre-mixed. Then, the mixture was dispersed with a sand grinder filled with 0.5 mm zirconia beads in 50% volume fraction. Thus, a pigment dispersion-1 with a pigment content of 17 mass% was prepared.

The average particle diameter of the pigment particles contained in this pigment dispersion-1 was 109 nm. In addition, the measurement of the average particle diameter was performed by "Zetasizer 1000HS" manufactured by Marl Balloon Co., Ltd.

### [Preparation of Ink]

While stirring the pigment dispersion-1 prepared above, each additive indicated below was added one by one so that pigment solid content became 5.0 mass parts, and the ink composition was prepared. Thereafter, the mixture was filtered through a 0.8 µm filter to obtain Ink 1. There was no substantial change in composition before and after filtration.

| | |
|---|---|
| Pigment solid content: | 5.0 mass parts |
| Ethylene glycol: | 10.0 mass parts |
| Propylene glycol: | 20.0 mass parts |
| Surfactant Orphin E1010 (manufactured by Nisshin Chemical Co., Ltd.): | 1.0 mass part |
| Oxazoline group-containing polymer dispersed in water (EPOCROS K-2010E, solid content: 40 mass%) | 0.5 mass part |
| Ion-exchanged water: | An amount that makes the total amount of 100 mass parts |

In Examples, the blending amount (mass parts) of the cross-linking agent in the ink composition is a value converted to solid content.

### [Preparation of Inks 2 to 35]

Inks 2 to 35 were prepared in the same manner as preparation of the Ink 1 except that the type and amount of the oxazoline group-containing resin, and the cross-linking agent (epoxy and carboxyimide) outside the present invention were changed.

The detail of the crosslinking agent used is described in the following.

K-2010 E: Nippon Shokubai Co., Ltd.
K-2020 E: Nippon Shokubai Co., Ltd.
WS-700: Nippon Shokubai Co., Ltd.
WS-300: Nippon Shokubai Co., Ltd.
Epolight 1600: Kyoeisha Chemical Co., Ltd.
CARBODILITE SV-02: Nisshinbo Co., Ltd.

Each evaluation was performed according to the following method using ink-jet recording liquid sets 1 to 35 which are combinations of the pretreatment liquid and the ink prepared above.

### «Evaluation»

### (Preparation of Printing sample)

After applying a pretreatment liquid with a wet film thickness of 9 µm to a coating weight of 1.6 g/m² to the following substrate by roller coating method, it is dried for 5 minutes with warm air at 60 °C. Thus, the substrate used for evaluation was prepared.

As a substrate, PET: E5102 (Toyobo) or OPP: FOS-AQ (Futamura Chemical Co., Ltd.) was used.

Two independently driven ink-jet heads (360 dpi, ejection amount: 14 pL) manufactured by Konica Minolta Co., Ltd. were arranged side by side so that the nozzles were staggered, and a head module capable of printing an image of 720 dpi x 720 dpi by a single pass method was prepared. Two such head modules were prepared and arranged in parallel along the transport direction of the transport stage for transporting the recording medium. Each head module was installed so as to intersect with the transport direction (the movement axis of the transport stage). In this manner, when the recording medium is passed once, the printing rate can be 200%, that is, the ink coverage (22.5 ml/m²) for two colors can be printed.

The recording medium was stuck on the conveyance stage so that the undercoat layer was on top, the conveyance was performed at a speed of 60 m/min, and the image was printed by a single pass method when the recording medium passed under the head. As a test image, an image was printed in which a character having a size of 6 points was removed and arranged as an autline character in a 7 cm square solid image having an ink coverage of 22.5 ml/m². After printing by the ink-jet method, the recording medium was placed on a hot plate and dried at 70 °C for 15 minutes to obtain a laminate body having a pretreatment layer and an ink layer.

### <Image quality>

The ink layer (substrates: PET and OPP) of the obtained laminate was visually observed, and solid embedding and bleeding were evaluated according to the following evaluation criteria.

⊚ : Solid image is embedded without white lines. The six-point character can be reproduced without damaged details.
○ : Three to four white streaks are recognized in the solid image. The six-point character can be reproduced without damaged details.
× : The details of the six point letters are damaged.

### <Adhesiveness>

With the solid image of the formed image (substrates: PET and OPP), the tape peeling test by cross-cut method was made by cutting the image into 5 x 5 grids at 1 mm intervals with a cutter, and the evaluation was made based on the following criteria.

⊚ : Good without peeling off with tape
○ : 1 or more and 3 or less grid-like cuts are peeled off, but good level
Δ : 4 or more squares and 6 or less grid-like cuts are peeled off, but acceptable level for practical use
× 7 or more grid-like cuts are peeled off, and unacceptable level for practical use

### <Water resistance>

The solid image (substrate: PET) of the formed image above was stored at 40 °C for 3 days, and then cut into a 10 cm x 1 cm strip so that the solid part would be the cut end face to obtain a test piece. The test piece was boiled in a pressure cooker for 30 minutes, the condition of the test piece after boiling was visually confirmed, and the water resistance of the image with each ink was evaluated based on the following criteria.

⊚ : There is no peeling of the test piece at all.
○ : There is partial peeling on the inside of the test piece, but no peeling on the cut end surface.
Δ : There is peeling on the cut end surface.
× The image part is peeled off from the film.

### <Peeling strength>

As illustrated in FIG. 3, a dry laminate adhesive (TAKELAC A626, made by Mitsui Chemicals, Inc.) and a two-part curing type isocyanate cross-linking agent (TAKENATE A50, made by Mitsui Chemicals, Inc.) were applied in a coating amount of 3.0 g/m² to obtain a coated layer (54) on a printed matter (a pretreatment layer (52) and an ink layer (53)) formed on a PET film (51),
and the coated layer (54) was bonded with a CPP film (55) (P1128 60 µm, made by Toyobo Co., Ltd.) to obtain a PET/CPP laminate body (the numbers in parentheses refer to the numbers indicated in FIG. 3.). The obtained laminate body was cut into a length of 70 mm and a width of 15 mm, and the peeling strength in the 90 degree direction was measured at a peeling speed of 300 mm/min using a TENSILON tensile tester.

⊚: 5.0 N/15 mm or more
○ : 3.5 N/15 mm or more and less than 5.0 N/15 mm
Δ : 1.0 N/15 mm or more and less than 3.5 N/15 mm
× Less than 1.0 N/15 mm
The laminate strength that causes no practical problems is 1.0 N/15 mm or more.

The compositions of the ink sets are indicated in Tables I to IV below. The evaluation results are listed in Table V below.

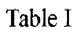

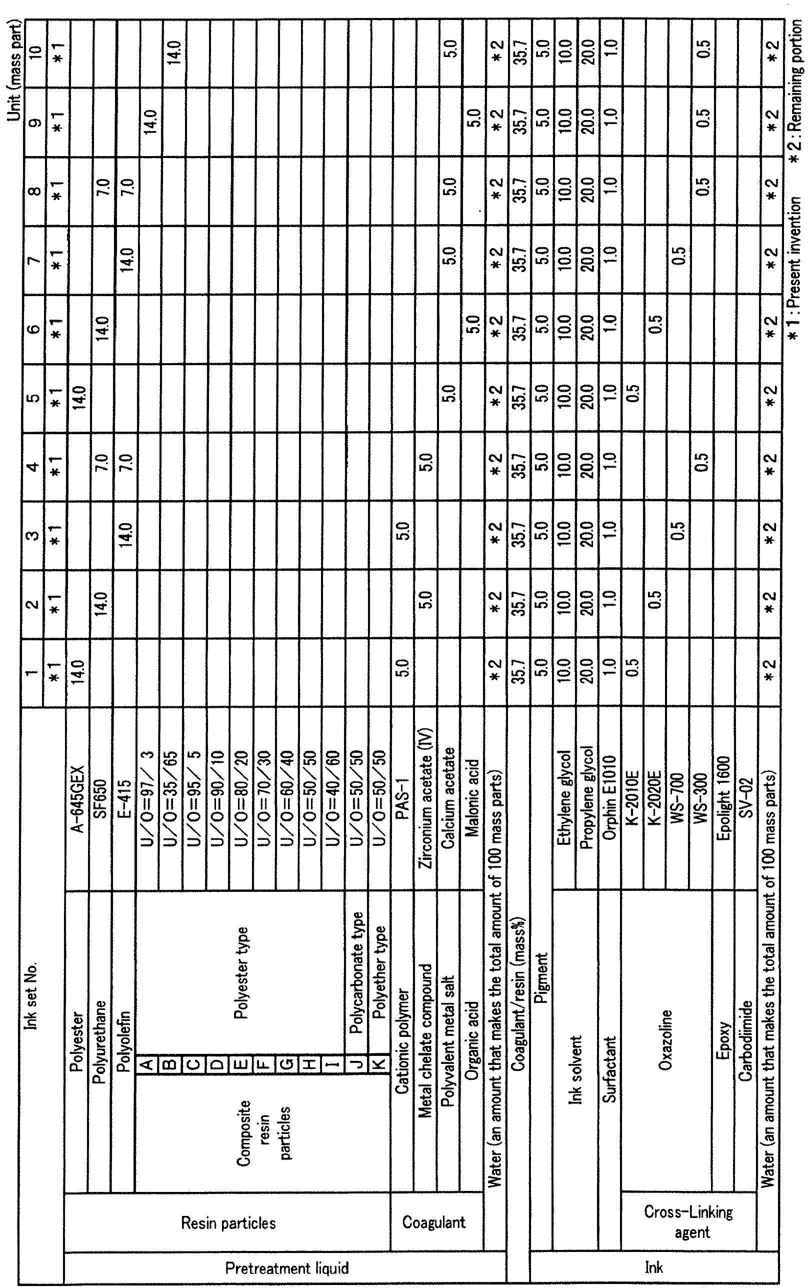

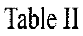

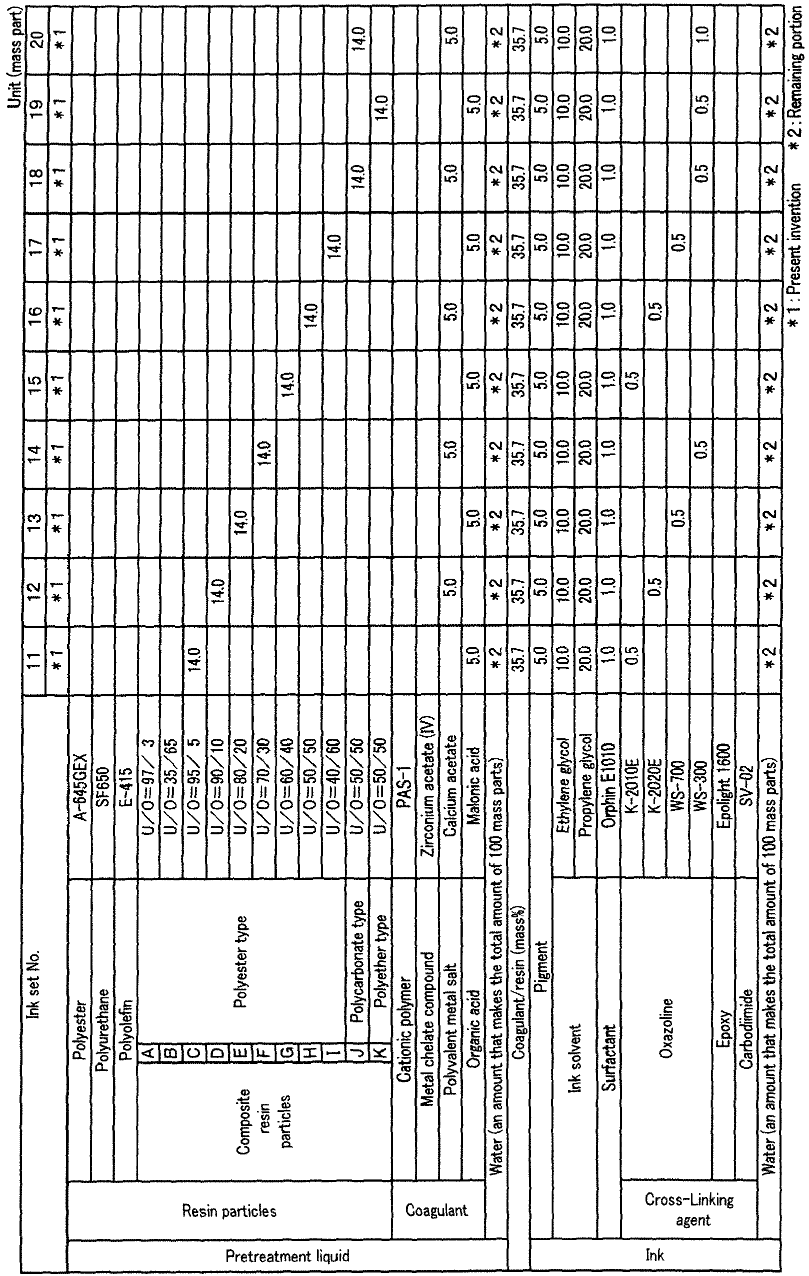

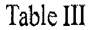

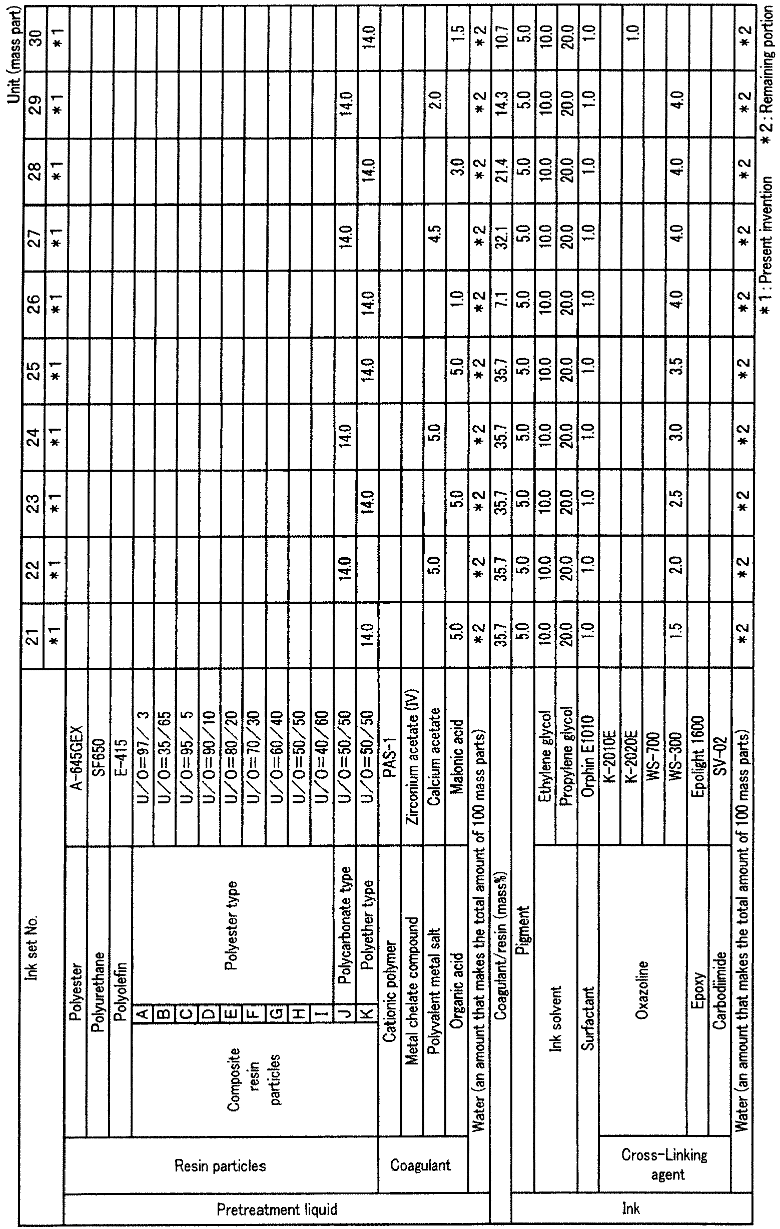

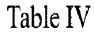

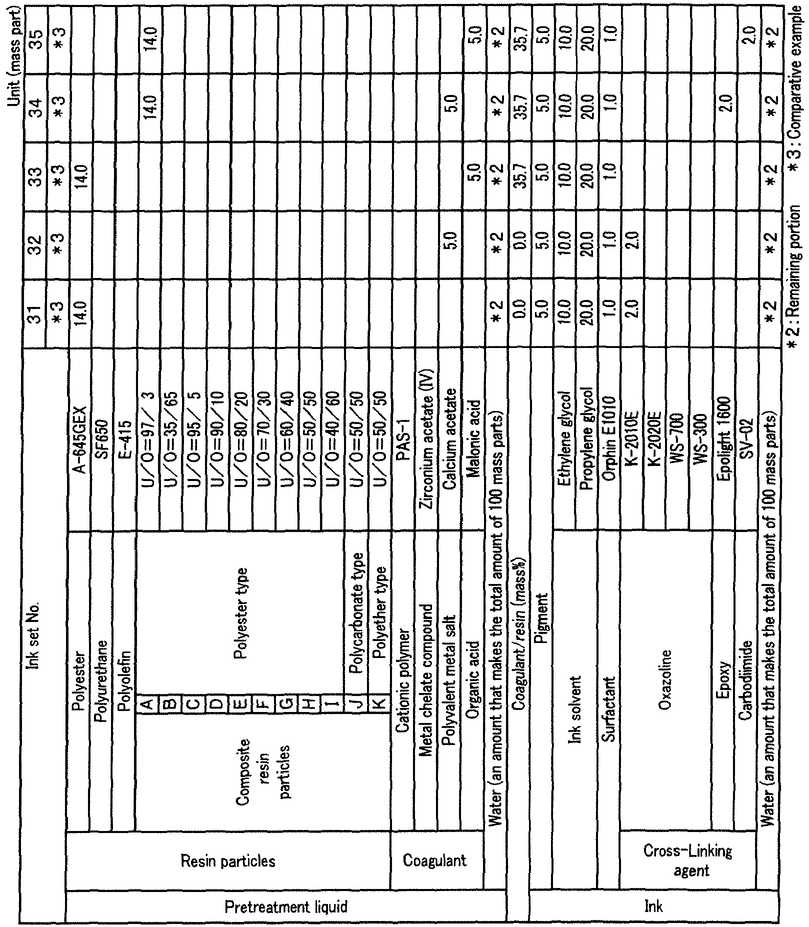

**Table V**

| Ink set No. | Image quality | Image adhesiveness | | Water resistance | Peeling strength | Remarks |
|---|---|---|---|---|---|---|
| | | PET | OPP | | | |
| 1 | ○ | Δ | Δ | Δ | Δ | Present invention |
| 2 | ○ | Δ | Δ | Δ | Δ | Present invention |
| 3 | ○ | Δ | Δ | Δ | Δ | Present invention |
| 4 | ○ | Δ | Δ | Δ | Δ | Present invention |
| 5 | ○ | ○ | Δ | Δ | Δ | Present invention |
| 6 | ○ | ○ | Δ | Δ | Δ | Present invention |
| 7 | ○ | Δ | ○ | Δ | Δ | Present invention |
| 8 | ○ | ○ | Δ | Δ | Δ | Present invention |
| 9 | ○ | ○ | ○ | Δ | ○ | Present invention |
| 10 | ○ | ○ | ○ | Δ | ○ | Present invention |
| 11 | ○ | ○ | ○ | ○ | ○ | Present invention |
| 12 | ○ | ○ | ○ | ○ | ○ | Present invention |
| 13 | ○ | ○ | ○ | ○ | ○ | Present invention |
| 14 | ○ | ⊚ | ⊚ | ○ | ○ | Present invention |
| 15 | ○ | ⊚ | ⊚ | ○ | ○ | Present invention |
| 16 | ○ | ⊚ | ⊚ | ○ | ○ | Present invention |
| 17 | ○ | ⊚ | ⊚ | ○ | ○ | Present invention |
| 18 | ○ | ⊚ | ⊚ | ⊚ | ○ | Present invention |
| 19 | ○ | ⊚ | ⊚ | ⊚ | ○ | Present invention |
| 20 | ○ | ⊚ | ⊚ | ⊚ | ⊚ | Present invention |
| 21 | ○ | ⊚ | ⊚ | ⊚ | ⊚ | Present invention |
| 22 | ○ | ⊚ | ⊚ | ⊚ | ⊚ | Present invention |
| 23 | ○ | ⊚ | ⊚ | ⊚ | ⊚ | Present invention |
| 24 | ○ | ⊚ | ⊚ | ⊚ | ⊚ | Present invention |
| 25 | ○ | ⊚ | ⊚ | ⊚ | ⊚ | Present invention |
| 26 | ○ | ⊚ | ⊚ | ⊚ | ⊚ | Present invention |
| 27 | ⊚ | ⊚ | ⊚ | ⊚ | ⊚ | Present invention |
| 28 | ⊚ | ⊚ | ⊚ | ⊚ | ⊚ | Present invention |
| 29 | ⊚ | ⊚ | ⊚ | ⊚ | ⊚ | Present invention |
| 30 | ⊚ | ⊚ | ⊚ | ⊚ | ⊚ | Present invention |
| 31 | × | Δ | Δ | Δ | Δ | Comparative example |
| 32 | ○ | × | × | × | × | Comparative example |
| 33 | ○ | × | × | × | × | Comparative example |
| 34 | × | Δ | Δ | Δ | Δ | Comparative example |
| 35 | × | Δ | Δ | Δ | Δ | Comparative example |

From Table V, it was confirmed that when the ink-jet recording liquid set according to the present invention was used, the image quality, the adhesion, the water resistance, and the peeling strength were excellent.

## Claims

1. An ink-jet recording liquid set comprising a pretreatment liquid and an ink,
wherein the pretreatment liquid contains a coagulant, water, and water-insoluble resin particles containing at least one of a polyester skeleton, a polyolefin skeleton and polyurethane skeleton; and
the ink contains at least a pigment, a compound having an oxazoline group, and water.

2. The ink-jet recording liquid set described in claim 1,
wherein the coagulant is a polyvalent metal salt or an organic acid.

3. The ink-jet recording liquid set described in claim 1 or 2,
wherein the water-insoluble resin particles are composite resin particles in which a polyolefin resin is contained in a polyurethane resin.

4. The ink-jet recording liquid set described in any one of claims 1 to 3,
wherein the water-insoluble resin particles contain composite resin particles formed by emulsifying a polyolefin resin in a polyurethane resin.

5. The ink-jet recording liquid set described in claim 3 or 4,
wherein a content mass ratio (U/O) value of the polyurethane resin (U) and the polyolefin resin (O) in the composite resin particles is in the range of 40/60 to 95/5.

6. The ink-jet recording liquid set described in any one of claims 3 to 5,
wherein a polyol component in the polyurethane resin has a carbonate group or an ether bond.

7. The ink-jet recording liquid set described in any one of claims 1 to 6,
wherein an amount of the compound having an oxazoline group contained in the ink is in the range of 0.5 to 5 mass%.

8. The ink-jet recording liquid set described in any one of claims 1 to 7,
wherein an amount of the coagulant contained in the pretreatment liquid is in the range of 10 to 35 mass%.

9. A method of preparing the pretreatment liquid for ink-jet recording described in any one of claims 1 to 8, the method comprising the steps of:
forming composite resin particles by emulsifying a polyolefin resin and a polyurethane resin; and
mixing the composite resin particles and the coagulant.

10. A printed matter formed on a non-absorptive film substrate using the ink-jet recording liquid set described in any one of claims 1 to 8.

11. An ink-jet recording method recording an image on a non-absorptive film substrate using the ink-jet recording liquid set described in any one of claims 1 to 8.
